# EUROPÄISCHE PATENTSCHRIFT

(11) **EP 3 072 662 B1**
(45) Veröffentlichungstag und Bekanntmachung des Hinweises auf die Patenterteilung: **04.09.2019**
(21) Anmeldenummer: 16157959.4
(22) Anmeldetag: 29.02.2016
(51) Int. Cl.: B29C 44/58, B29C 33/18, B29C 44/60

(54) **SCHÄUMWERKZEUG UND VERFAHREN ZUR FIXIERUNG EINES TRÄGERS IN EINEM SOLCHEN SCHÄUMWERKZEUG**
FOAMING MOULD AND METHOD FOR FIXING A CARRIER IN SUCH A FOAMING MOULD
MOULE À MOUSSE ET PROCÉDÉ DE FIXATION D'UN SUPPORT DANS UN TEL MOULE À MOUSSE

(30) Priorität: 23.03.2015 DE 102015104278
(43) Veröffentlichungstag der Anmeldung: 28.09.2016
(73) Patentinhaber: Josef Weischer GmbH & Co. KG, 48282 Emsdetten (DE)
(72) Erfinder: HUNE, Rupert, 49090 Osnabrück (DE)
(74) Vertreter: Bossmeyer, Jörg Peter

(56) Entgegenhaltungen:
- EP-A1- 0 445 992
- JP-A- 2008 037 056
- JP-A- 2012 158 151
- US-A- 4 087 224

## Beschreibung

Die Erfindung betrifft ein Schäumwerkzeug sowie ein Verfahren zur Fixierung eines Trägers in einem solchen Schäumwerkzeug.

Ein Schäumwerkzeug der hier betroffenen Art dient der Herstellung eines eine Schaumstoffschicht aufweisenden Verbundbauteils. Das Verbundbauteil besteht aus einem Träger, der in das Schäumwerkzeug eingesetzt und mittels eines Vakuums darin fixiert wird. Dabei ist es bekannt, Vakuumsauger einzusetzen, die den Träger punktuell in dem Schäumwerkzeug festhalten. Eine derartige Lösung wird beispielsweise in der JP 2012 158151 A beschrieben. Darüber hinaus werden innerhalb der Trägeraufnahmegeometrie des Schäumwerkzeuges unabhängig von den Vakuumsaugern einzelne Vakuumfelder erzeugt, die die Fixierung des Trägers durch die Vakuumsauger ergänzen. Durch die wahllose Verteilung von Vakuumsaugern und Vakuumfeldern ist es bisher jedoch nicht gelungen, den Träger problemlos in der Trägeraufnahmegeometrie des Schäumwerkzeuges zu fixieren.

Das Schäumwerkzeug dient nach der Fixierung des Trägers dazu, den Träger mit einem Schaumwerkstoff zu beschichten beziehungsweise den Schaumwerkstoff als Zwischenschicht zwischen zwei Bauteile einzubringen, was bedeutet, dass beispielsweise auch eine zusätzliche Ausstattung mit einer Folie oder ähnlichen Materialien erfolgen kann. Die dadurch geschaffenen Verbundbauteile kommen beispielsweise in der Automobilindustrie und hier zum Beispiel als Armaturenbrett zum Einsatz, wobei eine besondere Problematik darin besteht, dass derartige Verbundbauteile eine erhebliche Baugröße aufweisen und daher verhältnismäßig schwierig zu handhaben sind, was sich insbesondere darin äußert, dass der Träger zur Herstellung des Verbundbauteils aufgrund der geringen Materialstärke, sowie der heute zum Einsatz kommenden Materialien sehr verwindungsweich ist. Aus diesem Grund ist die Einbringung des Trägers in das Schäumwerkzeug trotz der zum Einsatz kommenden Vakuumsauger beziehungsweise Vakuumfelder immer noch mit einem erheblichen, manuellen Aufwand verbunden. Für die Gewährleistung einer Prozesssicherheit und einer hohen Qualität bei der Herstellung des Verbundbauteils ist es jedoch erforderlich, dass der Träger optimal, das heißt, vollständig und flächig anliegend in dem Schäumwerkzeug fixiert werden kann. Weitere Schwierigkeiten stellen die bei der Verarbeitung entstehenden, hohen Prozesstemperaturen dar. Durch die vorhandenen Temperatureinflüsse ergeben sich vergleichsweise hohe Wärmedehnungen, so dass sich der Träger dadurch zusätzlich verziehen kann. Formabweichungen des Trägers verschlechtern jedoch insgesamt die Beschichtung beziehungsweise die Befüllung des Trägers mit dem Schaumstoff, was beispielsweise zu unerwünscht großen Lufteinschlüssen beziehungsweise sogar zur Ausbildung von Lunkern im Schaumstoff führen kann. Im Ergebnis ist leider zum gegenwärtigen Zeitpunkt immer noch eine unverhältnismäßig hohe Ausschussrate zu verzeichnen, die auf die zuvor erwähnten Probleme zurückzuführen ist.

Der Erfindung liegt die Aufgabe zugrunde, ein Schäumwerkzeug bereitzustellen, welches eine einfache und sehr genaue sowie lagegerechte Positionierung des Trägers innerhalb einer im Schäumwerkzeug vorhandenen Trägeraufnahmegeometrie ermöglicht, wobei ein besonderer Wert auf eine möglichst weit gehende Automatisierung gelegt werden sollte. Darüber hinaus ist ein Verfahren anzugeben, das eine optimierte Fixierung des Trägers in dem Schäumwerkzeug gestattet.

Die Erfindung löst diese Aufgabenstellung mit den Merkmalen der unabhängigen Patentansprüche 1 und 13.

Weitere Ausgestaltungen der Erfindung sind Gegenstand der sich jeweils anschließenden Unteransprüche.

Ein Schäumwerkzeug, geeignet zur Herstellung eines eine Schaumstoffschicht aufweisenden Verbundbauteils, das aus einem in das Schäumwerkzeug einsetzbaren und mittels eines Vakuums darin fixierbaren Träger und einer in dem Schäumwerkzeug zumindest partiell mit dem Träger zu verbindenden Schaumstoffschicht besteht, wobei in dem Schäumwerkzeug eine Trägeraufnahmegeometrie vorhanden ist, die Vakuumsauger und/oder mehrere Vakuumfelder aufweist, wurde erfindungsgemäß dahingehend weitergebildet, dass die einzelnen Vakuumfelder von einem ersten Vakuumfeld ausgehend, kaskadenförmig und richtungsorientiert aktiviert werden.

Mit der hier vorgestellten Lösung wird der manuelle Aufwand zur Befestigung des Trägers in dem Schäumwerkzeug auf ein Minimum reduziert. Der Herstellungsprozess des Verbundbauteils lässt sich nahezu vollständig automatisieren. Es bedarf lediglich des Einsetzens des Trägers in die Trägeraufnahmegeometrie, wobei automatisch mindestens ein Vakuumsauger oder Vakuumfeld aktiviert wird und den Träger zunächst in dem Schäumwerkzeug fixiert. Im Anschluss daran werden, vorzugsweise aber nicht zwingend, von dem Vakuumsauger beziehungsweise von dem ersten Vakuumfeld ausgehend, die einzelnen, weiteren Vakuumfelder nacheinander und/oder in Kombination, jedoch kaskadenförmig und in vordefinierten Richtungen aktiviert, so dass der Fixierungsbereich des Trägers innerhalb der Trägeraufnahmegeometrie des Schäumwerkzeuges stufenweise zunimmt, was bevorzugt selbsttätig fortschreitend, also automatisch, erfolgt. Durch die erfindungsgemäße Ausführung eines Schäumwerkzeuges wird nicht nur eine optimierte Fixierung des Trägers in dem Schäumwerkzeug erreicht. Ein weiterer Vorteil dieser Lösung besteht nämlich auch darin, dass bisher sich einstellende Vakuumsverluste nahezu vollständig vermieden werden können. Dies führt zu der Möglichkeit, die Pumpenleistung zur Erzeugung des Vakuums zu reduzieren, so dass Vakuumpumpen mit geringerer Leistung zum Einsatz kommen können.

Ein weiterer Vorteil ist ferner darin zu sehen, dass die vollständige Vakuumleistung exakt zu dem Zeitpunkt zur Verfügung steht, zu dem sie benötigt wird. Das Schäumwerkzeug ist auf diese Weise insgesamt kostengünstiger herstellbar. Weiterhin wurde durch die Erfindung die Positionierung und die Fixierung des Trägers insgesamt in erheblichem Maße vereinfacht. Die Trägeraufnahmegeometrie wird gemäß der Erfindung in eine Matrix aufgeteilt, die demzufolge kaskadenförmig und richtungsorientiert von den Vakuumfeldern ausgefüllt wird.

Eine erste Ausgestaltung der Erfindung ist darin zu sehen, dass die Außenabmessungen der Vakuumfelder sich von einem ersten Vakuumfeld ausgehend, kaskadenförmig fortschreitend innerhalb der Trägeraufnahmegeometrie erweiternd ausgeführt sind. Anders ausgedrückt erweitern sich die Vakuumfelder beispielsweise von einem Zentrum aus zu den genannten Randbereichen. Diese Erweiterung kann linear, kreuzweise, diagonal oder in zueinander versetzten Reihen erfolgen. Zur Umsetzung dieses Lösungsgedankens bieten sich folglich sehr viele unterschiedliche Geometrien der kaskadenartigen und richtungsorientierten Erweiterung der Vakuumfelder an.

Darüber hinaus geht ein weiterführender Lösungsvorschlag dahin, dass die Trägeraufnahmegeometrie mehrere Vakuumsauger aufweist. Die Verteilung mehrerer Vakuumsauger innerhalb der Trägeraufnahmegeometrie gestattet eine Vereinfachung der anfänglichen Fixierung des Trägers zu Beginn der Bestückung des Schäumwerkzeuges. Die an dem Schäumwerkzeug tätige Bedienperson hat lediglich die Aufgabe, den Träger kurzzeitig leicht gegen die Trägeraufnahmegeometrie des Schäumwerkzeuges zu drücken, bis die Vakuumsauger den Träger angesaugt haben. Die weitergehende Fixierung erfolgt dann vollautomatisch und mit hoher Präzision in der zuvor beschriebenen Weise.

Zur Umsetzung der erfindungsgemäßen Lösung bieten sich alternative oder miteinander kombinierbare Vorgehensweisen an.

So ist es einerseits möglich, dass ein an das erste Vakuumfeld unmittelbar angrenzendes, weiteres Vakuumfeld sich mit dem inneren Vakuumfeld zu einem Vakuumkreis verbindend ausgeführt ist. Ebenso können zwei benachbarte Vakuumfelder einen Abstand zueinander aufweisen und in derselben Weise, wie zuvor beschrieben zu einem Vakuumkreis verbunden werden. Diese kaskadenartige Erweiterung des ersten Vakuumfeldes um jeweils ein weiteres Vakuumfeld erfolgt hierbei immer in einer bestimmten Richtung. Durch die Vereinigung des ersten Vakuumfeldes mit jeweils einem weiteren Vakuumfeld entsteht ein Vakuumkreis, der durch Hinzufügung eines weiteren Vakuumfeldes zu dem nächst größeren Vakuumkreis heranwächst. Dieser Vorgang wird wiederholt, bis in der Trägeraufnahmegeometrie ein in sich geschlossener Vakuumkreis gebildet ist, der den Träger vollständig durch das darin gebildete Vakuum in der Trägeraufnahmegeometrie fixiert.

Eine weitere, alternative oder mit den zuvor beschriebenen Varianten kombinierbare Lösungsmöglichkeit besteht darin, dass das innere Vakuumfeld sich mit einem dieses aufnehmenden, also umschließenden, weiteren Vakuumfeld zu einem Vakuumkreis erweiternd ausgeführt ist. Bei dieser Lösung wird zunächst ein in seinen Außenabmessungen erstes, kleineres Vakuumfeld durch Zuschaltung eines in seinen Außenabmessungen größeren Vakuumfeldes, das das erste Vakuumfeld vollständig einschließt, erweitert. Dadurch wird ein erster Vakuumkreis gebildet, dessen Außenabmessungen sich durch Zuschaltung des nächsten Vakuumfeldes mit den nächst größeren Außenabmessungen zu einem noch größeren Vakuumkreis erweitert. Mit anderen Worten werden hierbei zwei nacheinander aktivierte Vakuumfelder von innen nach außen erweitert und grenzen nicht, wie bei den zuvor erwähnten Variante, mit ihren Außenkonturen an einander an beziehungsweise sind sie nicht benachbart zueinander angeordnet, wie dies zuvor ebenfalls beschreiben wurde.

Gemäß einem weiterführenden Vorschlag nach der Erfindung weist wenigstens ein Vakuumfeld mindestens einen Näherungssensor auf, bei dem es sich beispielsweise um einen Vakuumsensor handeln kann. Der Vakuumsensor hat dabei die Aufgabe, ein Signal zu erzeugen, wenn am aktivierten Vakuumfeld ein vorab eingestellter Unterdruck zu verzeichnen ist, der eine zuverlässige Fixierung des Trägers innerhalb dieses Vakuumfeldes gewährleistet. Dadurch ergibt sich eine Kontrollmöglichkeit der Wirksamkeit der Fixierung des Trägers. Eine andere Möglichkeit besteht darin, die Annäherung des Trägers an die Trägeraufnahmegeometrie zu sensieren. Allgemein können für diesen Einsatzzweck sowohl berührungslos aktivierbare und hier als "Näherungssensoren" bezeichnete Sensoren, wie beispielsweise kapazitive, induktive oder optische Sensoren, als auch Berührungssensoren, wie Mikroschalter oder Stößelschalter, zum Einsatz kommen.

Kommt ein Vakuumsensor zum Einsatz, so wird in vorteilhafter Weise und bevorzugt ein Drucksensor eingesetzt, da derartige Drucksensoren handelsüblich sind und damit kostengünstig sowie an die jeweiligen Bedingungen des Schäumwerkzeuges angepasst, beschafft werden können.

Das vom Näherungssensor erzeugte Signal bietet darüber hinaus auch die Möglichkeit, das nächstfolgende Vakuumfeld zu aktivieren und somit die erforderliche Schaltung der einzelnen Vakuumfelder umzusetzen. Eine konkrete Lösungsmöglichkeit hierfür besteht darin, dass das Messsignal des Näherungssensors zur Ansteuerung einzelner Vakuumsaugventile verwendet wird, sodass durch das damit realisierbare Öffnen eines entsprechenden Vakuumsaugventils in mindestens einem Vakuumfeld ein Vakuum erzeugt werden kann. Bevorzugt weist demnach jedes Vakuumfeld einen entsprechenden Näherungssensor oder auch einen Vakuumsensor auf.

Da in einem erfindungsgemäßen Schäumwerkzeug hauptsächlich mit Vakuum gearbeitet wird, bietet es sich an, die Vakuumsaugventile als pneumatisch angesteuerte Vakuumsaugventile auszuführen und zu betreiben. Damit sind keine zusätzlichen Aufwendungen für den Betrieb der Vakuumsaugventile erforderlich, weil entsprechende Aggregate ohnehin vorhanden sind. Weitere, alternative und problemlos umsetzbare Möglichkeiten bestehen ferner darin, die Vakuumsaugventile mechanisch oder elektrisch anzusteuern.

Eine spezielle Ausführungsvariante eines Vakuumsaugers besteht darin, dass dieser ein Faltenbalgsauger ist. Natürlich können auch mehrere oder sämtliche Vakuumsauger als Faltenbalgsauger ausgeführt werden. Hierbei handelt es sich ebenfalls um handelsübliche Bauelemente, die kostengünstig beschafft und in das Schäumwerkzeug eingesetzt werden können, so dass sich dessen Herstellung erheblich vereinfacht.

Eine weitere Ausführungsform zur Vereinfachung des Schäumwerkzeuges ist darin zu sehen, dass die Vakuumsauger und die Vakuumsaugventile mit einem gemeinsamen Vakuumverteiler gekoppelt sind. Auf diese Weise können sowohl die Vakuumsauger, als auch die Vakuumsaugventile zentral mit dem für ihren Betrieb erforderlichen Vakuum versorgt werden. Dadurch wird es auch möglich, nur eine einzige Vakuumserzeugungseinrichtung, also beispielsweise nur eine Vakuumpumpe zum Einsatz zu bringen.

Zur Vereinfachung der Handhabung des Schäumwerkzeuges nach der Erfindung besteht eine konkrete Ausgestaltung darin, dass das Schäumwerkzeug mehrteilig ausgeführt ist und aus einem Oberwerkzeug und einem Unterwerkzeug besteht, die dichtend miteinander verbindbar sind, wobei das Oberwerkzeug und/oder das Unterwerkzeug Vakuumsauger und/oder Vakuumfelder aufweist beziehungsweise aufweisen. Durch diese konstruktive Ausführung des Schäumwerkzeuges können das Oberwerkzeug und das Unterwerkzeug beispielsweise mit einer scharnierartigen Gelenkverbindung gekoppelt werden, so dass die Bestückung mit dem Träger sowie die Entnahme des fertig gestellten Verbundbauteils wesentlich vereinfacht wird. Mit einem derartig gestalteten Schäumwerkzeug können zudem auch komplexe Verbundbauteile hergestellt werden.

Das erfindungsgemäße Verfahren zur optimierten Fixierung eines Trägers in einem Schäumwerkzeug zur Herstellung eines wenigstens eine Schaumstoffschicht aufweisenden Verbundbauteils ist durch folgende Verfahrensschritte gekennzeichnet:
- Ansetzen eines mit einer Schaumstoffschicht zu versehenden Trägers an mindestens einem in einer Trägeraufnahmegeometrie eines Schäumwerkzeuges vorhandenen Vakuumsauger, dessen Vakuum den Träger zunächst in wenigstens einem Punkt fixiert,
- Freigabe eines ersten, den Vakuumsauger aufnehmenden Vakuumfeldes durch Ansteuerung mindestens eines Vakuumsaugventils, sodass der Träger in diesem Vakuumfeld vollständig angesaugt wird,
- anschließende Freigabe mindestens eines weiteren Vakuumfeldes, das das erste Vakuumfeld einschließt oder sich an das erste Vakuumfeld anschließt, sodass dadurch ein Vakuumkreis entsteht und der Träger somit durch eine kaskadenförmige Erweiterung der einzelnen Vakuumfelder in dem Schäumwerkzeug fixiert wird.

Das hier vorgestellte Verfahren verdeutlicht die Vorgehensweise zur optimierten Fixierung des Trägers in dem Schäumwerkzeug durch Anwendung einer kaskadenförmige Erweiterung der einzelnen Vakuumfelder, die sich jeweils zu einem Vakuumkreis miteinander verbinden und damit eine von innen nach außen anwachsende Vakuumfläche bilden, die letztlich den Träger optimal in der Trägeraufnahmegeometrie des Schäumwerkzeuges fixiert. Das Verfahren ist verhältnismäßig einfach umsetzbar und gewährleistet eine hohe Prozesssicherheit sowie einen hohen Automatisierungsgrad. Darüber hinaus kann hierbei, verglichen mit einem manuellen Fixieren des Trägers, die Gesamtzykluszeit zur Herstellung eines Verbundbauteils in erheblichem Maße reduziert werden.

Dabei kann gemäß einer ersten Ausgestaltung des Verfahrens ein wesentlicher Vorteil darin gesehen werden, dass ein Vakuumsensor permanent oder in zeitlich konstanten Abständen das anliegende Vakuum in einem Vakuumfeld sensiert und das somit erzeugte Signal zur Ansteuerung von Vakuumsaugventilen genutzt wird, wobei ein nachfolgendes Vakuumsaugventil erst freigegeben wird, wenn an dem zuvor mit einem Vakuum beaufschlagten Vakuumfeld ein definiertes Vakuum erfasst worden ist. Durch diese Vorgehensweise kann vermieden werden, dass bereits ein nächstes Vakuumfeld mit Vakuum versorgt wird, wenn das vorherige Vakuumfeld den Träger noch nicht in ausreichender Weise in der Trägeraufnahmegeometrie des Schäumwerkzeuges fixiert hat. Damit wird jedoch auch eine Möglichkeit geschaffen, die Leistung der Vakuumserzeugungseinrichtung, also beispielsweise der Vakuumpumpe, zu reduzieren. Im Ergebnis ergibt sich somit eine wiederholbare und hundertprozentig nachvollziehbare Qualität der Fixierung.

Ebenso verhält es sich mit dem Vorschlag, dass der Schäumvorgang zur Herstellung des Verbundbauteils erst gestartet wird, wenn der letzte Vakuumsensor des letzten Vakuumfeldes das definierte Vakuum erfasst hat. In diesem Zustand ist der Träger extrem gleichmäßig in der Trägeraufnahmegeometrie fixiert, so dass der Auftrag der Schaumstoffschicht auf den Träger mit gleich bleibender Qualität erfolgen kann.

Das erfindungsgemäße Verfahren kann auch dadurch verbessert werden, dass der Schäumvorgang zur Herstellung des Verbundbauteils erst gestartet wird, wenn wenigstens ein Vakuumsensor einen Mindestwert eines Vakuums innerhalb eines Vakuumkreises erfasst hat. In diesem Fall wird der absolute Betrag des Vakuums erfasst und als Steuerungssignal genutzt, um den Schäumvorgang zu starten. Alternativ hierzu geht ein Vorschlag jedoch auch dahin, den Schäumvorgang erst dann zu starten, wenn wenigstens ein Vakuumsensor einen Mindestwert eines Vakuums mehrerer Vakuumfelder erfasst hat. Anders ausgedrückt besteht der Vorteil dieser Lösung darin beispielsweise nur einen Vakuumsensor zu verwenden und damit das Vakuum mehrerer Vakuumfelder zu messen. Erst wenn dabei insgesamt ein vorab definierbarer Wert für das Vakuum erreicht ist, wird der Schäumvorgang gestartet. Bei den genannten Vorgehensweisen werden folglich nicht die Vakuumventile, sondern die Vakuumfelder beziehungsweise Vakuumkreise sensiert. Damit kann eine Prozesssicherheit gewährleistet und der Träger optimal in der Trägeraufnahmegeometrie fixiert werden.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: einen Blick in ein Schäumwerkzeug in einer ersten Ausführungsvariante,
- Figur 2:: einen Blick in ein Schäumwerkzeug in einer zweiten Ausführungsvariante,
- Figur 3:: einen Blick in ein Schäumwerkzeug in einer dritten Ausführungsvariante,
- Figur 4:: einen Blick in ein Schäumwerkzeug in einer vierten Ausführungsvariante,
und
- Figur 5:: einen vereinfachten Vakuumschaltplan.

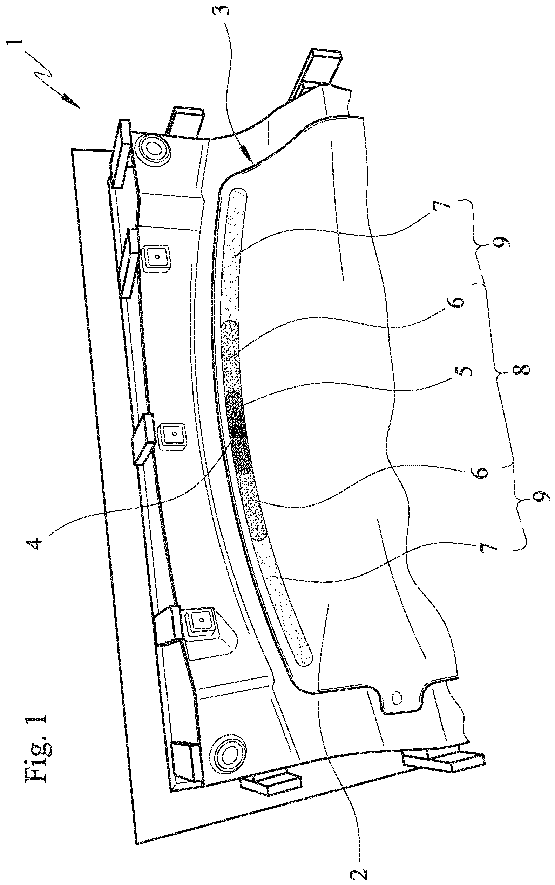

Die Figur 1 erlaubt einen Blick in einen Teil eines Oberwerkzeuges eines Schäumwerkzeuges 1, dass eine Trägeraufnahmegeometrie 3 aufweist, in die vorliegend ein Träger 2 aus einem Kunststoff eingesetzt ist. Der Träger 2 wird in dem Schäumwerkzeug 1 in einem nachfolgenden Arbeitsgang mit einer Schaumstoffschicht versehen, die beispielsweise durch ein Spritzverfahren auf die Oberfläche des Trägers 2 aufgebracht wird. Um eine gleich bleibende Qualität der Herstellung eines dadurch geschaffenen Verbundbauteils zu gewährleisten, ist es erforderlich, dass der Träger 2 verzugs- und spannungsfrei in der Trägeraufnahmegeometrie 3 des Schäumwerkzeuges 1 aufgenommen ist. Hierfür weist das in Figur 1 dargestellte Ausführungsbeispiel zunächst einen Vakuumsauger 4 auf, der sich etwa mittig des Trägers 2 in dem Schäumwerkzeug 1 befindet. Das Einsetzen des Trägers 2 erfolgt durch eine Bedienperson, die lediglich die Aufgabe hat, den Träger 2 im Bereich des Vakuumsaugers 4 an die Trägeraufnahmegeometrie 3 anzusetzen. Nach der dabei erfolgenden Aktivierung des Vakuumsaugers 4 wird der Träger 2 zunächst vorläufig in dem Schäumwerkzeug 1 gehalten. Zu diesem Zeitpunkt besteht jedoch noch die Gefahr, dass sich der Träger 2 innerhalb der Trägeraufnahmegeometrie 3 in unerwünschter Weise verformen kann. Um dies zu verhindern, weist die Ausführung des Schäumwerkzeuges 1 in Figur 1 zunächst ein erstes Vakuumfeld 5 auf, in dem sich in diesem Fall der Vakuumsauger 4 befindet. Anders ausgedrückt umschließt das erste Vakuumfeld 5 den Vakuumsauger 4. Nach dem Ansetzen des Trägers 2 an dem Vakuumsauger 4 wird das erste Vakuumfeld 5 aktiviert und mit einem Vakuum beaufschlagt, so dass dieser Bereich des Trägers 2 vollständig an die Trägeraufnahmegeometrie 3 angesaugt wird. Im Anschluss daran erfolgt die Aktivierung der in Richtung der Außenabmessung des Trägers 2 seitlich links und rechts neben dem ersten Vakuumfeld 5 vorhandenen Vakuumfelder 6, sodass dadurch eine kaskadenförmig und richtungsorientierte Aktivierung der Vakuumfelder gegeben ist. In dieser Phase der Fixierung des Trägers 2 in der Trägeraufnahmegeometrie 3 haben sich folglich bereits das Vakuumfeld 5 und die Vakuumfelder 6 zu einem gemeinsamen Vakuumkreis 8 verbunden, der bereits eine relativ große Fläche des Trägers 2 an die Trägeraufnahmegeometrie 3 des Schäumwerkzeuges 1 ansaugt. In einem weiteren Schritt erfolgt nunmehr auch die Aktivierung der sich seitlich an die Vakuumfelder 6 anschließenden Vakuumfelder 7, so dass diese zusammen mit den übrigen Vakuumfeldern 5, 6 beziehungsweise dem dadurch geschaffenen Vakuumkreis 8 einen Vakuumkreis 9 bilden, der die gesamte Breite des Trägers 2 umfasst und damit den Träger 2 gleichmäßig in der Trägeraufnahmegeometrie 3 des Schäumwerkzeuges 1 fixiert.

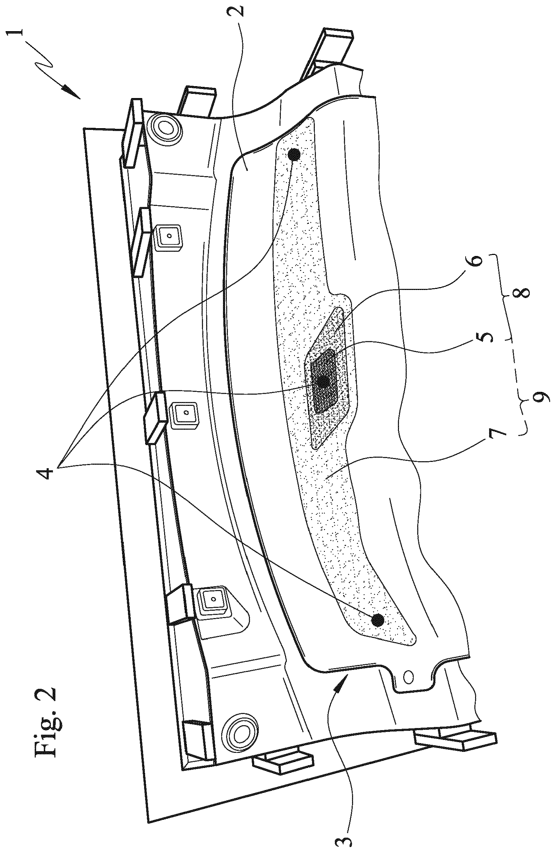

Eine zu der Darstellung in Figur 1 abweichende Ausführungsvariante eines Schäumwerkzeuges 1 geht aus der Figur 2 hervor. Hierbei wird der durch eine Bedienperson in die Trägeraufnahmegeometrie 3 eingesetzte Träger 2 durch insgesamt drei Vakuumsauger 4 vorläufig fixiert. Diese Fixierung ist bei dem gezeigten Ausführungsbeispiel bereits etwas genauer, als es bei der Variante der Fall war, die im Zusammenhang mit der Beschreibung der Figur 1 erläutert wurde. Die Besonderheit des Schäumwerkzeuges 1 in Figur 2 besteht darin, dass der mittig der Trägeraufnahmegeometrie 3 angeordnete Vakuumsauger 4 vollständig in einem ersten Vakuumfeld 5 aufgenommen und von diesem umschlossen ist. Nach der Aktivierung dieses ersten Vakuumfeldes 5 wird ein weiteres Vakuumfeld 6 mit einem Vakuum beaufschlagt, so dass die Vakuumfelder 5 und 6 gemeinsam einen Vakuumkreis 8 bilden, der den Träger 2 bereits in verbesserter Weise an die Trägeraufnahmegeometrie 3 ansaugt. Im Anschluss hieran erfolgt schließlich noch die Aktivierung des Vakuumfeldes 7, das sowohl den mittleren Vakuumsauger 4, das Vakuumfeld 5, als auch das Vakuumfeld 6, also insgesamt den ersten Vakuumkreis 8, vollständig aufnimmt und umschließt. Dadurch wird ein in seinen Abmessungen annähernd der Trägeraufnahmegeometrie 3 entsprechender Vakuumkreis 9 gebildet, der den Träger 2 nunmehr optimal an die Trägeraufnahmegeometrie 3 ansaugt.

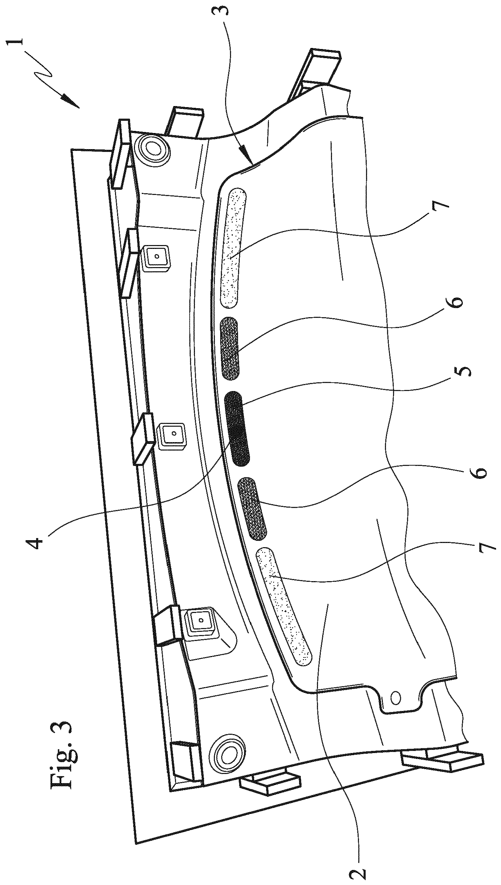

Das in der Figur 3 gezeigte Beispiel für ein Schäumwerkzeug weist im Unterschied zu dem im Zusammenhang mit der Figur 1 beschriebenen benachbart und mit einem geringen Abstand zueinander angeordnete Vakuumfelder 5, 6, 7 auf, die ausgehend von dem ersten Vakuumfeld 5, in dem sich hier auch der Vakuumsauger 4 befindet, kaskadenförmig und richtungsorientiert, das heißt, bezogen auf die dargestellte Ausführungsvariante, zu beiden Seiten des ersten Vakuumfeldes 5 in Richtung des Randbereiches der Trägeraufnahmegeometrie 3 nacheinander zugeschaltet werden. Im Rahmen dieser Lösung können aus einzelnen oder mehreren Vakuumfeldern, wie auch bei den zuvor bereits beschriebenen Ausführungen, durch Zusammenschluss Vakuumkreise gebildet werden, was in der Darstellung der Figur 3 jedoch nicht nochmals explizit gezeigt ist.

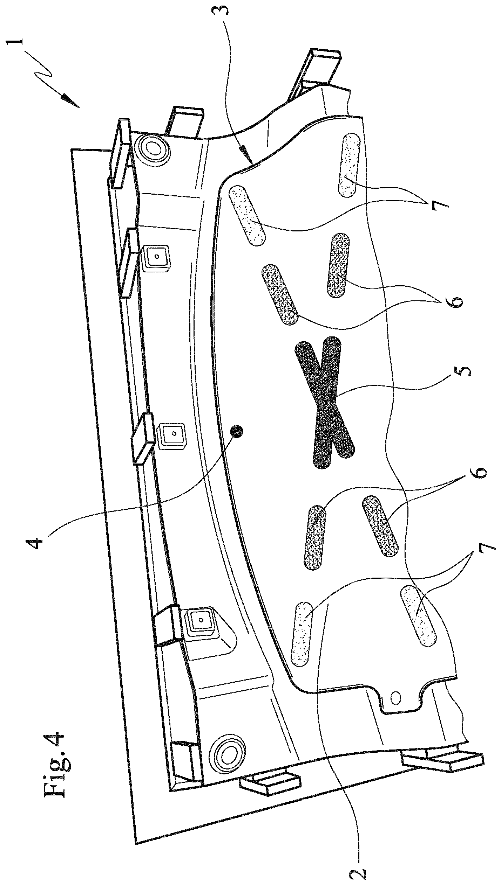

Ähnlich verhält es sich auch bei dem in der Figur 4 dargestellten Schäumwerkzeug 1. Hier sind die Vakuumfelder 5, 6, 7 kreuzweise verlaufend angeordnet, sodass eine möglichst gleichmäßige Verteilung der Vakuumfelder 5-7 innerhalb der Trägeraufnahmegeometrie 3 erreicht werden kann. Auch hierbei können wieder einzelne oder mehrere Vakuumfelder zu Vakuumkreisen vereinigt werden.

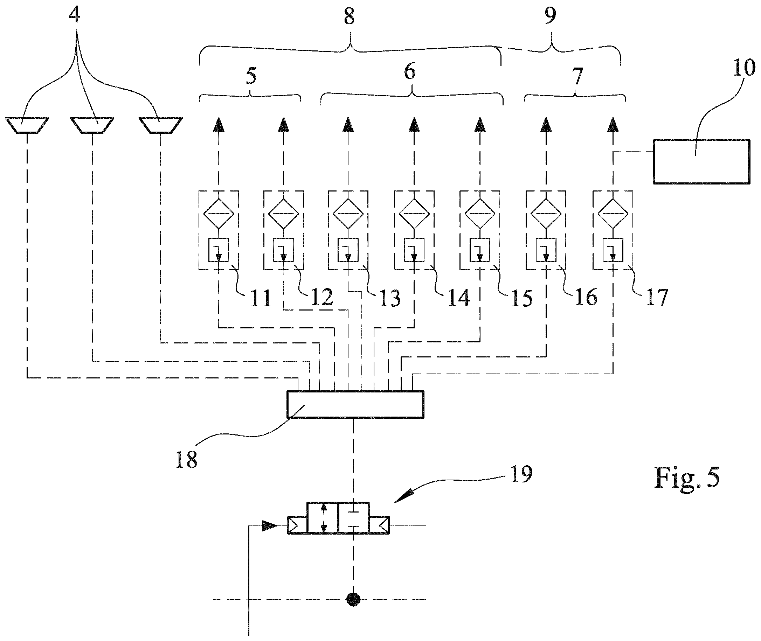

Zur besseren Veranschaulichung der Wirkungsweise des im Zusammenhang mit der Beschreibung der Ausführungsbeispiele eines Schäumwerkzeuges 1 dient das in Figur 5 dargestellte Prinzipschaltbild. Ein Vakuumsventil 19, über das das gezeigte System mit einem Vakuum versorgt werden kann, ist unmittelbar mit einem Vakuumverteiler 18 gekoppelt, von dem ausgehend diverse Vakuumleitungen die einzelnen Vakuumsauger 4 sowie diverse Vakuumsaugventile 11-17 mit einem Vakuum versorgt werden. Die Wirkungsweise der Vakuumsauger 4 wurde bereits im Zusammenhang mit der Beschreibung der Figur 2 erläutert. Wie aus der Figur 3 ersichtlich wird, werden jeweils mehrere Vakuumsaugventile verwendet, um ein Vakuumfeld 5, 6 oder 7 anzusteuern. So dienen beispielsweise die Vakuumsaugventile 11 und 12 der Ansteuerung des ersten Vakuumfeldes 5, die Vakuumssaugventile 13, 14, 15 der Ansteuerung des zweiten Vakuumfeldes 6 und die Vakuumsaugventile 16 und 17 der Ansteuerung des Vakuumsfeldes 7. Bei der in Figur 3 gezeigten Ausführungsvariante ist ein Vakuumsensor 10 im letzten Vakuumfeld 7 vorgesehen, dessen Messsignal mit einem vorab eingestellten Vakuumsignal verglichen wird, so dass mittels einer hierfür geeigneten Steuerungseinheit der Auftrag des Schaumstoffes innerhalb des Schäumwerkzeuges 1 erst aktiviert wird, wenn am letzten Vakuumfeld 7 mittels des Vakuumsensors 10 signalisiert wird, dass das erforderliche Vakuum anliegt und damit auch der Vakuumkreis 9 bis in die Randbereiche des Trägers 2 ein Vakuum zur Verfügung stellt, das gewährleistet, dass der Träger 2 optimal in der Trägeraufnahmegeometrie 3 fixiert ist.

### BEZUGSZEICHENLISTE:

- 1: Schäumwerkzeug
- 2: Träger
- 3: Trägeraufnahmegeometrie
- 4: Vakuumsauger
- 5: Vakuumfeld
- 6: Vakuumfeld
- 7: Vakuumfeld
- 8: Vakuumkreis
- 9: Vakuumkreis
- 10: Näherungssensor
- 11-17: Vakuumsaugventil
- 18: Vakuumverteiler
- 19: Vakuumventil

## Patentansprüche

1. Schäumwerkzeug, geeignet zur Herstellung eines eine Schaumstoffschicht aufweisenden Verbundbauteils, das aus einem in das Schäumwerkzeug (1) einsetzbaren und mittels eines Vakuums darin fixierbaren Träger (2) und einer in dem Schäumwerkzeug (1) zumindest partiell mit dem Träger (2) zu verbindenden Schaumstoffschicht besteht, wobei in dem Schäumwerkzeug (1) eine Trägeraufnahmegeometrie (3) vorhanden ist, die Vakuumsauger (4) und mehrere Vakuumfelder (5, 6, 7) aufweist,
**dadurch gekennzeichnet, dass** das Schäumwerkzeug derart ausgebildet ist, dass die einzelnen Vakuumfelder (5, 6, 7) von einem ersten Vakuumfeld (5) ausgehend, kaskadenförmig und richtungsorientiert aktiviert werden.

2. Schäumwerkzeug nach Anspruch 1,
**dadurch gekennzeichnet, dass**
die Außenabmessungen der Vakuumfelder (5, 6, 7) sich von einem ersten Vakuumfeld (5) ausgehend, kaskadenförmig fortschreitend innerhalb der Trägeraufnahmegeometrie (3) erweiternd ausgeführt sind.

3. Schäumwerkzeug nach einem der vorstehend genannten Ansprüche,
**dadurch gekennzeichnet, dass**
die Trägeraufnahmegeometrie (3) mehrere Vakuumsauger (4) aufweist.

4. Schäumwerkzeug nach einem der vorstehend genannten Ansprüche,
**dadurch gekennzeichnet, dass**
mindestens ein zu dem ersten Vakuumfeld (5) benachbartes oder an das erste Vakuumfeld (5) angrenzendes, weiteres Vakuumfeld (6, 7) sich mit dem ersten Vakuumfeld (5) beziehungsweise mit dem benachbarten Vakuumfeld (5 und/oder 6 und/oder 7) zu einem Vakuumkreis (8, 9) verbindend ausgeführt ist.

5. Schäumwerkzeug nach einem der vorstehend genannten Ansprüche,
**dadurch gekennzeichnet, dass**
das erste Vakuumfeld (5) sich mit wenigstens einem dieses umschließenden, weiteren Vakuumfeld (6) zu einem Vakuumkreis (8) erweiternd ausgeführt ist.

6. Schäumwerkzeug nach einem der vorstehend genannten Ansprüche,
**dadurch gekennzeichnet, dass**
wenigstens ein Vakuumfeld (5, 6, 7) mindestens einen Näherungssensor (10) aufweist.

7. Schäumwerkzeug nach Anspruch 6,
**dadurch gekennzeichnet, dass**
der Näherungssensor (10) ein Drucksensor ist.

8. Schäumwerkzeug nach Anspruch 6 oder 7,
**dadurch gekennzeichnet, dass**
das Messsignal des Näherungssensors (10) zur Ansteuerung einzelner Vakuumsaugventile (11, 12, 13, 14, 15, 16, 17) nutzbar ist, sodass durch den Öffnungszustand eines Vakuumsaugventils (11, 12, 13, 14, 15, 16, 17) in mindestens einem Vakuumfeld (5, 6, 7) ein Vakuum gegeben ist.

9. Schäumwerkzeug nach Anspruch 8,
**dadurch gekennzeichnet, dass**
die Vakuumsaugventile (11, 12, 13, 14, 15, 16, 17) pneumatisch, mechanisch oder elektrisch angesteuerte Vakuumsaugventile sind.

10. Schäumwerkzeug nach einem der vorstehend genannten Ansprüche,
**dadurch gekennzeichnet, dass**
mindestens ein Vakuumsauger (4) ein Faltenbalgsauger ist.

11. Schäumwerkzeug nach einem der vorstehend genannten Ansprüche,
**dadurch gekennzeichnet, dass**
die Vakuumsauger (4) und die Vakuumsaugventile (11, 12, 13, 14, 15, 16, 17) mit einem gemeinsamen Vakuumverteiler (18) gekoppelt sind.

12. Schäumwerkzeug nach einem der vorstehend genannten Ansprüche,
**dadurch gekennzeichnet, dass**
das Schäumwerkzeug (1) mehrteilig ausgeführt ist und aus einem Oberwerkzeug und einem Unterwerkzeug besteht, die dichtend miteinander verbindbar sind, wobei das Oberwerkzeug und/oder das Unterwerkzeug Vakuumsauger (4) und/oder Vakuumfelder (5, 6, 7) aufweist beziehungsweise aufweisen.

13. Verfahren zur Fixierung eines Trägers (2) in einem Schäumwerkzeug (1) zur Herstellung eines wenigstens eine Schaumstoffschicht aufweisenden Verbundbauteils, **gekennzeichnet durch** folgende Verfahrensschritte:
- Ansetzen eines mit einer Schaumstoffschicht zu versehenden Trägers (2) an mindestens einen in einer Trägeraufnahmegeometrie (3) eines Schäumwerkzeuges (1) vorhandenen Vakuumsauger (4), dessen Vakuum den Träger (2) zunächst in wenigstens einem Punkt fixiert,
- Freigabe eines ersten, den Vakuumsauger (4) aufnehmenden Vakuumfeldes (5) durch Ansteuerung mindestens eines Vakuumsaugventils (11, 12), sodass der Träger (2) in diesem Vakuumfeld (5) vollständig angesaugt wird,
- anschließende Freigabe mindestens eines weiteren Vakuumfeldes (6), das das erste Vakuumfeld (5) einschließt oder sich an das erste Vakuumfeld (5) anschließt, sodass dadurch ein Vakuumkreis (8) entsteht und der Träger (2) somit durch eine kaskadenförmige Erweiterung der Vakuumfelder (5, 6, 7) in dem Schäumwerkzeug (1) fixiert wird.

14. Verfahren nach Anspruch 13,
**dadurch gekennzeichnet, dass**
ein Vakuumsensor (10) permanent oder in zeitlich konstanten Abständen das anliegende Vakuum in einem Vakuumfeld (5, 6, 7) sensiert und das somit erzeugte Signal zur Ansteuerung von Vakuumsaugventilen (11, 12, 13, 14, 15, 16, 17) genutzt wird, wobei ein nächstfolgendes Vakuumsaugventil erst freigegeben wird, wenn an dem zuvor mit einem Vakuum beaufschlagten Vakuumfeld ein definiertes Vakuum erfasst worden ist.

15. Verfahren nach Anspruch 14,
**dadurch gekennzeichnet, dass**
der Schäumvorgang (1) zur Herstellung des Verbundbauteils erst gestartet wird, wenn der letzte Vakuumsensor (10) des letzten Vakuumfeldes (5, 6, 7) das definierte Vakuum erfasst hat.

16. Verfahren nach Anspruch 13,
**dadurch gekennzeichnet, dass**
der Schäumvorgang (1) zur Herstellung des Verbundbauteils erst gestartet wird, wenn wenigstens ein Vakuumsensor (10) einen Mindestwert eines Vakuums innerhalb mindestens eines Vakuumkreises (8, 9) oder eines Vakuums mehrerer Vakuumfelder (5, 6, 7) erfasst hat.

## Claims

1. Foaming tool, suitable for the manufacture of a composite component with a foam layer, consisting of a support (2) which can be used in the foaming tool (1) and fixed inside it using a vacuum and a foam layer to be connected at least partially with the support (2), whereby there is a support groove geometry (3) in the foaming tool (1), which has the vacuum cup (4) and several vacuum fields (5,6,7),
**characterised in that** the foaming tool is designed in such a way that
the individual vacuum fields (5,6,7) are activated based on one initial vacuum field (5), in a cascade and direction-oriented.

2. Foaming tool according to claim 1,
**characterised in that** the external dimensions of the vacuum fields (5,6,7) are shown in the support groove geometry (3) based on one initial vacuum field (5), in a cascade.

3. Foaming tool according to any one of the preceding claims, **characterised in that** the support groove geometry (3) has several vacuum cups (4).

4. Foaming tool according to any one of the preceding claims, **characterised in that** at least one additional vacuum field (6,7) neighbouring or bordering the initial vacuum field (5) is designed connected with the first vacuum field (5) or with the neighbouring vacuum field (5 and/or 6 and/or 7) to a vacuum circuit (8,9).

5. Foaming tool according to any one of the preceding claims, **characterised in that** the first vacuum field (5) is designed extending to a vacuum circuit (8) with at least one of this surrounding, additional vacuum field (6).

6. Foaming tool according to any one of the preceding claims, **characterised in that** at least one vacuum field (5,6,7) has a proximity sensor (10).

7. Foaming tool according to claim 6,
**characterised in that** the proximity sensor (10) is a pressure sensor.

8. Foaming tool according to claim 6 or 7,
**characterised in that** the measuring signal of the proximity sensor (10) can be used to control individual vacuum suction valves (11,12,13,14,15,16,17) so that through the opening state of a vacuum suction valve (11,12,13,14,15,16,17), there is a vacuum in at least one vacuum field (5,6,7).

9. Foaming tool according to claim 8,
**characterised in that** the vacuum suction valves (11,12,13,14,15,16,17) are pneumatically, mechanically or electrically controlled vacuum suction valves.

10. Foaming tool according to any one of the preceding claims, **characterised in that** at least one vacuum cup (4) is a bellows suction cup.

11. Foaming tool according to any one of the preceding claims, **characterised in that** the vacuum cup (4) and vacuum suction valves (11,12,13,14,15,16,17) are coupled with a shared vacuum distributor (18).

12. Foaming tool according to any one of the preceding claims, **characterised in that** the foaming tool (1) is in multiple parts, consisting of an upper part and a lower part that can be connected to each other tightly, whereby the upper tool and/or lower tool have a vacuum cup (4) and/or vacuum fields (5,6,7).

13. Procedure for fixing a support (2) in a foaming tool (1) for the purpose of producing a composite part with at least one foam layer, **characterised by** the following procedural steps:
- Applying a support (2) intended for a foam layer to at least one vacuum cup (4) in a support groove geometry (3) of a foaming tool (1), whose vacuum fixes the support (2) initially in at least one point,
- Activating an initial vacuum field (5) receiving the vacuum cup (4) by controlling at least one vacuum suction valve (11,12) so that the support (2) is fully drawn into this vacuum field (5),
- Then activating at least one other vacuum field (6) that includes the first vacuum field (5) or adjoins the first vacuum field (5), creating a vacuum circuit (8) and fixing the support (2) in the foaming tool (1) through the cascading expansion of the vacuum fields (5,6,7).

14. Procedure according to claim 13,
**characterised in that** a vacuum sensor (10) senses the vacuum in a vacuum field (5,6,7) constantly or at regular intervals and the signal created is used to control vacuum suction valves (11,12,13,14,15,16,17), whereby the next vacuum suction valve is only activated when a defined vacuum is recorded at a previous vacuum field where a vacuum is applied.

15. Procedure according to claim 14,
**characterised in that** the foaming process (1) for producing the composite part is only initiated when the last vacuum sensor (10) has recorded the defined vacuum at the last vacuum field (5,6,7).

16. Procedure according to claim 13, **characterised in that** the foaming process (1) for producing the composite part is only initiated when at least one vacuum sensor (10) has recorded a minimum value for a vacuum within at least one vacuum circuit (8,9) or a vacuum of multiple vacuum fields (5,6,7).

## Revendications

1. Outil de moussage conçu pour la fabrication d'un composant composite comprenant une couche de matériau alvéolaire, qui est constitué d'un support (2) pouvant être inséré dans l'outil de moussage (1) et y être fixé au moyen d'un vide et est constitué d'une couche de matériau alvéolaire à relier dans l'outil de moussage (1) au moins partiellement avec le support (2), moyennant quoi, dans l'outil de moussage (1), existe une géométrie de logement de support (3) qui comprend les ventouses à vide (4) et plusieurs champs de vide (5, 6, 7), **caractérisé en ce que** l'outil de moussage est conçu de façon à ce que les différents champs de vide (5, 6, 7) soient activés, à partir d'un premier champ de vide (5) en cascade et de manière orientée dans une direction.

2. Outil de moussage selon la revendication 1,
**caractérisé en ce que**
les dimensions extérieures des champs de vide (5, 6, 7) sont réalisées de manière à s'élargir, à partir d'un premier champ de vide (5), en cascade de manière progressive à l'intérieur de la géométrie de logement du support (3).

3. Outil de moussage selon l'une des revendications précédentes,
**caractérisé en ce que**
la géométrie de logement du support (3) comprend plusieurs ventouses à vide (4).

4. Outil de moussage selon l'une des revendications précédentes,
**caractérisé en ce que**
au moins un autre champ de vide (6, 7), voisin du premier champ de vide (5) ou adjacent au premier champ de vide (5), est réalisé de manière être relié avec le premier champ de vide (5) ou avec le champ de vide voisin (5 et/ou 6 et/ou 7) afin d'obtenir un circuit de vide (8, 9).

5. Outil de moussage selon l'une des revendications précédentes,
**caractérisé en ce que**
le premier champ de vide (5) est réalisé de manière à s'élargir, avec au moins un autre champ de vide (6) entourant celui-ci, afin d'obtenir un circuit de vide (8).

6. Outil de moussage selon l'une des revendications précédentes,
**caractérisé en ce que**
au moins un champ de vide (5, 6, 7) comprend au moins un capteur de proximité (10).

7. Outil de moussage selon la revendication 6,
**caractérisé en ce que**
le capteur de proximité (10) est un capteur de pression.

8. Outil de moussage selon la revendication 6 ou 7,
**caractérisé en ce que**
le signal de mesure du capteur de proximité (10) peut être utilisé pour le contrôle de différentes soupapes à vide (11, 12, 13, 14, 15, 16, 17), de façon à ce que, du fait de l'état d'ouverture d'une soupape à vide (11, 12, 13, 14, 15, 16, 17), un vide soit généré dans au moins un champ de vide (5, 6, 7).

9. Outil de moussage selon la revendication 8,
**caractérisé en ce que**
les soupapes à vide (11, 12, 13, 14, 15, 16, 17) sont des soupapes à vides pneumatiques, mécaniques ou électriques.

10. Outil de moussage selon l'une des revendications précédentes,
**caractérisé en ce que**
au moins une ventouse à vide (4) est une ventouse à soufflets.

11. Outil de moussage selon l'une des revendications précédentes,
**caractérisé en ce que**
les ventouses à vide (4) et les soupapes à vide (11, 12, 13, 14, 15, 16, 17) sont couplées avec un répartiteur de vide (18) commun.

12. Outil de moussage selon l'une des revendications précédentes,
**caractérisé en ce que**
l'outil de moussage (1) est réalisé en plusieurs parties et est constitué d'un outil supérieur et d'outil inférieur, qui sont reliés entre eux de manière étanche, l'outil supérieur et/ou l'outil inférieur comprenant des ventouses à vide (4) et/ou des champs de vide (5, 6, 7).

13. Procédé de fixation d'un support (2) dans un outil de moussage (1) pour la fabrication d'un composant composite comprenant au moins une couche de matériau alvéolaire, **caractérisé par** les étapes suivantes :
- pose d'un support (2) à munir d'une couche de matériau alvéolaire sur au moins une ventouse à vide (4) se trouvant dans une géométrie de logement de support (3) d'un outil de moussage (1), dont le vide fixe le support (2) d'abord au niveau d'au moins un point,
- libération de premier champ de vide (5) logeant la ventouse à vide (4) par le contrôle d'au moins une soupape à vide (11, 12), de façon à ce que le support (2) soit entièrement aspiré dans ce champ de vide (5),
- puis libération d'au moins un autre champ de vide (6) qui inclut le premier champ de vide (5) ou qui prolonge le premier champ de vide (5), de façon à obtenir un circuit de vide (8) et à ce que le support (2) soit ainsi fixé par un élargissement en cascade des champs de vide (5, 6,7) dans l'outil de moussage (1).

14. Procédé selon la revendication 13,
**caractérisé en ce que**
un capteur de vide (10) mesure de manière permanente ou à des intervalles de temps constants, le vide existant dans un champ de vide (5, 6, 7) et le signal ainsi généré est utilisé pour le contrôle de soupapes à vide (11, 12, 13, 14, 15, 16, 17), une soupape à vide n'étant libérée que lorsque, au niveau du champ de vide sollicité par un vide, un vide défini a été mesuré.

15. Procédé selon la revendication 14,
**caractérisé en ce que**
le processus de moussage (1) pour la fabrication du composant composite n'est démarré que lorsque le dernier capteur de vide (10) du dernier champ de vide (5, 6, 7) a mesuré le vide défini.

16. Procédé selon la revendication 13,
**caractérisé en ce que**
le processus de moussage (1) pour la fabrication du composant composite n'est démarré que lorsque au moins un capteur de vide (10) a mesuré une valeur minimale d'un vide à l'intérieur d'au moins un circuit de vide (8, 9) ou d'un vide de plusieurs champs de vide (5, 6, 7).
